# EUROPÄISCHE PATENTSCHRIFT

(11) **EP 0 906 652 B1**
(45) Veröffentlichungstag und Bekanntmachung des Hinweises auf die Patenterteilung: **28.11.2001**
(21) Anmeldenummer: 97922924.2
(22) Anmeldetag: 30.04.1997
(51) Int. Cl.: H02K 11/04, H02K 5/20, F04D 29/58

(54) **ELEKTROMOTOR**
ELECTRIC MOTOR
MOTEUR ELECTRIQUE

(30) Priorität: 18.06.1996 DE 19624145
(43) Veröffentlichungstag der Anmeldung: 07.04.1999
(73) Patentinhaber: WILO GmbH, D-44263 Dortmund (DE)
(72) Erfinder: GENSTER, Albert, D-45768 Marl (DE)
(74) Vertreter: COHAUSZ HANNIG DAWIDOWICZ & PARTNER
(86) Internationale Anmeldenummer: EP9702219
(87) Internationale Veröffentlichungsnummer: WO9749162

(56) Entgegenhaltungen:
- EP-A- 0 629 780
- GB-A- 2 174 253
- US-A- 4 931 678

## Beschreibung

Die Erfindung betrifft einen Spalttopfmotor für eine Kreiselpumpe mit einem den Motor umgebenden Außenmantel, der von der Förderflüssigkeit zur Kühlung durchflossen ist.

Ein solcher Motor ist aus der EP-A-0629780 bekannt. Ferner ist es bei einem Elektromotor mit Frequenzumrichter bekannt, die elektronischen Bauteile, die Wärme erzeugen, innerhalb des Elektromotors nahe dem Fördermedium zu bringen, um diese hierdurch zu kühlen. Die hierbei aufgewendeten Konstruktionen sind zum Teil konstruktiv aufwendig und/oder benötigen innerhalb der Pumpe verhältnismäßig viel Platz.

Auch ist aus der GB-A-2174253 ein Miniaturelektromotor bekannt, wie er in kleinen Tonbandgeräten eingesetzt wird. Diese Technik wird bei großen Ekektromotoren nicht verwendet.

Aufgabe der Erfindung ist es, einen Spalttopfmotor der eingangs genannten Art so zu verbessern, daß bei einfacher Konstruktion und Montage sowie bei geringen Abmessungen eine hohe Kühleffektivität erreicht wird.

Diese Aufgabe wird erfindungsgemäß dadurch gelöst, daß der Motorenraum auf der der Abtriebseite abgewandten Stirnseite von einem Gehäusedeckel aus Metall verschlossen ist, der auf seiner Innenseite eine Wärmesenke für Wärme erzeugende Bauteile der Elektronik ist und mit seinem äußeren Rand an dem kühlenden Außenmantel anliegt.

Ein solcher endseitiger Gehäusedeckel kann optimal als Wärmesenke für elektronische Bauteile verwendet werden. Er ist einfach in der Herstellung und kann leicht von außen aufgesetzt werden. Er wird nicht nur durch die Außenluft, sondern auch von der Förderflüssigkeit gekühlt. Hierbei ist es besondes vorteilhaft, wenn der Deckel schildförmig ist.

Eine optimale Kühlung wird dann erreicht, wenn der Deckel aus Aluminium ist. Auch ist von besonderem Vorteil, wenn der Deckel einen zylindrischen Kragen aufweist, mit dem er an der Innenseite des Außenmantels zur Wärmeabgabe anliegt.

Vorzugsweise wird vorgeschlagen, daß die wärmeerzeugenden elektronischen Bauteile direkt auf der Innenseite des Deckels befestigt sind.

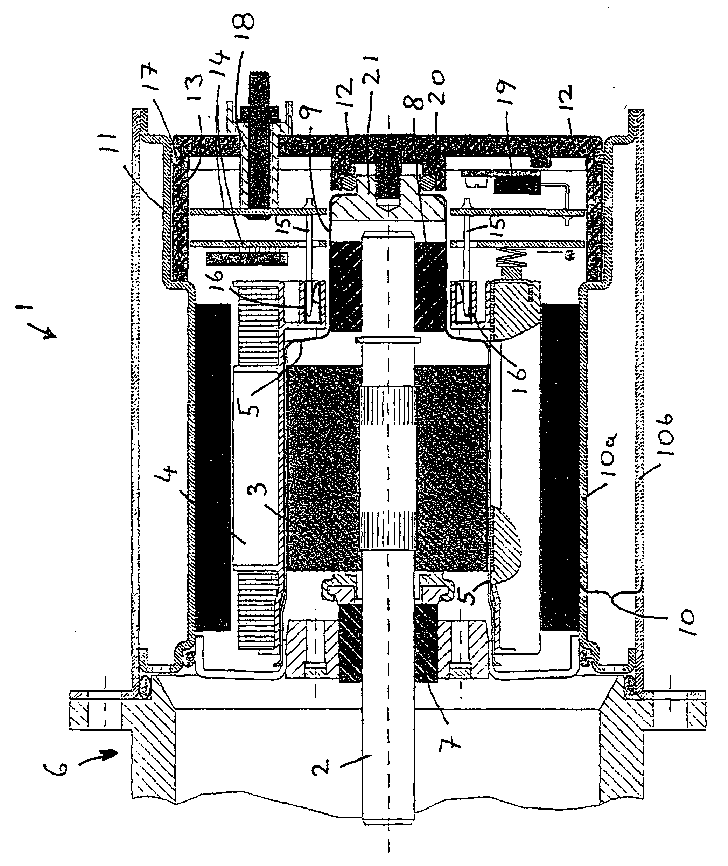

Ein Ausführungsbeispiel der Erfindung ist in der Zeichnung in einem axialen Schnitt dargestellt und wird im folgenden näher beschrieben.

Ein Spalttopfmotor für eine Motorkreiselpumpe weist eine Welle 2 auf, die einen Rotor 3 trägt. Der Rotor 3 ist von einem Stator 4 umgeben und zwischen diesen liegt ein Spalttopf 5. Das Innere des Spalttopf 5 ist von der Förderflüssigkeit der Kreiselpumpe 6 durchflossen.

Die Welle 2 trägt auf ihrer Abtriebsseite den nicht dargestellten Läufer der Pumpe 6 und ist nahe der Pumpe 6 als auch an dem der Pumpe abgewandten Ende in jeweils einem Lager 7,8 gehalten. Das von der Pumpe 6 entferntere Lager 8 ist in einer stufenförmigen Verengung 9 des Spattopfes 5 gehalten.

Der Stator 4 ist von einem Außenmantel 10 umgeben, der von der Förderflüssigkeit durchflossen ist. Der Außenmantel bildet mit einem zylindrischen Innenblech 10a und einem zylindrischen Außenblech 10b einen ringförmigen Raum für die kühlende Förderflüssigkeit.

Das Innenblech 10a ist auf der der Pumpe abgewandten Seite stufenförmig abgesetzt, wobei in dieser Stufe 11 ein koaxialer Gehäusedeckel 12 mit einem zylindrischen Kragen 13 einliegt. Der Kragen 13 liegt somit an der Stufe 11, die einen größeren Innendurchmesser aufweist als der übrige Bereich des Innenblechs 10a, eng an, um Wärme vom Deckel 12 zum Innenblech 10a und damit zur Förderflüssigkeit zu übertragen.

An der Innenseite des metallenen Gehäusedeckels 12 insbesondere aus Aluminium ist mindestens ein elektronisches Bauteil insbesondere eines Freuquenzumrichters derart eng anliegend befestigt, daß die Wärme des elektronischen Bauteils an den Deckel 12 abgegeben wird. Darüber hinaus ist innerhalb des zylindrischen Kragens 13 mindestens eine elektronische Bauteile tragende Platte 14 parallel zum Deckel 12 angeordnet, wobei mehrere an der Platte 14 vorstehende Stifte 5 in eine entsprechende Anzahl Buchsen an der Stirnseite des Motorenstators zur Kontaktierung hineinreichen. Im Ausführungsbeispiel sind zwei Platten 14 und zwei Kontaktstifte 15 als auch zwei Buchsen 16 angeordnet.

Der Gehäusedeckel 12 braucht von der Stirnseite des Motors her nur in diesen eingeschoben zu werden, um zu kontaktieren und fest einzusitzen. Hierbei befindet sich eine Ringdichtung 17 zwischen Kragen 13 und Stufe 11 des Innenblechs 10a. Darüber hinaus weist der Gehäusedeckel 12 eine Durchführung 18 für den elektrischen Anschluß auf.

An der Innenseite des Gehäusedeckels 12 ist mindestens ein koaxialer Vorsprung 20 angeformt, in dem ein 0-Ring eingelegt ist, in dem die stufenförmige Verengung 9 des Spalttopfes 5 an- oder einliegt, wobei am Ende der Verengung 9 ein Halteteil 21 im Spalttopf befestigt ist, das am Vorspung 20 anliegt oder in diesem einliegt. Hierdurch ist eine schwingungsdämpfende Verbindung zwischen Lager 8, Spalttopf 5 und Gehäusedeckel 12 gegeben.

## Patentansprüche

1. Spalttopfmotor (1) für eine Kreiselpumpe (6) mit einem den Motor umgebenden Außenmantel (10), der von der Förderflüssigkeit zur Kühlung durchflossen ist, **dadurch gekennzeichnet, daß** der Motorenraum auf der der Abtriebsseite abgewandten Stirnseite von einem Gehäusedeckel (12) aus Metall verschlossen ist, der auf seiner Innenseite eine Wärmesenke für Wärme erzeugende Bauteile (19) der Elektronik ist und mit seinem äußeren Rand (13) an dem kühlenden Außenmantel (10) anliegt.

2. Motor nach Anspruch 1, **dadurch gekennzeichnet, daß** der Deckel (12) schildförmig ist.

3. Motor nach Anspruch 1 oder 2, **dadurch gekennzeichnet, daß** der Deckel (12) aus Aluminium ist.

4. Motor nach einem der vorhergehenden Ansprüche, **dadurch gekennzeichnet, daß** der Deckel (12) einen zylindrischen Kragen (13) aufweist, mit dem er an der Innenseite des Außenmantels (10) zur Wärmeabgabe anliegt.

5. Motor nach einem der vorhergehenden Ansprüche, **dadurch gekennzeichnet, daß** die wärmeerzeugenden elektronischen Bauteile (19) direkt auf der Innenseite des Deckels (12) befestigt sind.

## Claims

1. A split-ring motor (1) for a centrifugal pump (6), having an outer casing (10) which encloses the motor and through which the cooling liquid flows, **characterised in that** the motor compartment on the end face remote from the output side is closed by a metal casing cover (12) which on its inner side is a heat sink for heat-generating electronic components (19) and which via its outer edge (13) bears against the cooling outer casing (10).

2. A motor according to claim 1, **characterised in that** the cover (12) is shield-shaped.

3. A motor according to claims 1 or 2, **characterised in that** the cover (12) is made of aluminium.

4. A motor according to one of the preceding claims, **characterised in that** the cover (12) has a cylindrical collar (13) via which it bears against the inside of the outer casing (10) to give off heat.

5. A motor according to one of the preceding claims, **characterised in that** the heat-generating electronic components (19) are attached directly to the inside of the cover (12).

## Revendications

1. Moteur à gaine (1) pour une pompe centrifuge (6) avec une chemise extérieure (10), entourant le moteur, qui est parcourue par le liquide refoulé aux fins de refroidissement,
**caractérisé en ce que** le volume de moteur est fermé, sur la face frontale écartée du côté dépression, par un couvercle (12) de carter en métal qui est, sur sa face intérieure, un dissipateur thermique pour des composants (19) de l'électronique engendrant de la chaleur et est en appui par son bord (13) extérieur sur la chemise extérieure (10) refroidissante.

2. Moteur selon la revendication 1,
**caractérisé en ce que** le couvercle (12) est en forme de blindage.

3. Moteur selon la revendication 1 ou 2,
**caractérisé en ce que** le couvercle (12) est en aluminium.

4. Moteur selon l'une des revendications précédentes,
**caractérisé en ce que** le couvercle (12) présente une collerette (13) cylindrique par laquelle il est en appui sur la face intérieure de la chemise extérieure (12) pour la conduction thermique.

5. Moteur selon l'une des revendications précédentes,
**caractérisé en ce que** les composants (19) électroniques engendrant de la chaleur sont fixés directement sur la face intérieure du couvercle (12).
